# EUROPEAN PATENT APPLICATION

(11) **EP 1 679 492 A1**
(43) Date of publication of application: **12.07.2006**
(21) Application number: 05405009.1
(22) Date of filing: 11.01.2005
(51) Int. Cl.: G01D 5/20, F16C 39/06

(54) **Eddy-current sensor and magnetic bearing device**

(71) Applicant: Mecos Traxler AG, 8404 Winterthur (CH)
(72) Inventor: Bühler, Philipp, 8005 Zürich (CH)
(74) Representative: Liebetanz, Michael

(57) **Abstract**

A distance sensor and a magnetic bearing device with such a sensor are disclosed. The sensor includes at least two essentially coplanar sensor coils (21, 22) which are operated in a manner in which magnetic fields generated by the sensor coils cancel at least partially in the regions inside the innermost and outside the outermost sensor coils. In a magnetic bearing device, such a sensor may be employed as an axial displacement sensor for the thrust disk (12). Preferably the sensor coils (21, 22) are essentially enclosed by an axial bearing unit (7) and the thrust disk (12). Thereby, the magnetic flux path of the control coil (72) is separated from the active sensor region, cross talk from the control coil (72) to the sensor coils (21, 22) is minimized, and effects of external disturbances are minimized. In addition, a novel rotation sensor is disclosed.

## Description

### Field of the invention

The present invention relates to the problem of measuring a distance between a sensor and a conducting surface and to the problem of determining the rotary state of a rotor. In a specific application, the invention relates to the problem of determining axial displacements of the thrust disk of a magnetic bearing device having active axial magnetic bearing elements.

In particular, the invention relates to a distance sensor with the features of the preamble of claim 1, to a rotation sensor with the features of the preamble of claim 7, to a sensor device, to a magnetic bearing device with the features of the preamble of claim 11, and to a method of operation of such a magnetic bearing device.

### Background of the invention

Often, a magnetic bearing device for suspending a rotor comprises an armature disk, also known as a thrust disk, mounted on a rotary shaft. On the axial sides of the armature disk, a pair of active axial magnetic bearing units is mounted. Axial displacements of the rotary shaft are measured by an axial displacement sensor. This sensor often faces an end of the rotary shaft, which is at a certain distance from the axial magnetic bearing units. The sensor output is then used for controlling the axial magnetic bearing elements in such a way that the axial position of the rotary shaft remains essentially constant, i.e., the distance between the sensor and the end of the rotary shaft is kept essentially constant.

However, by thermal expansion of the rotary shaft, the axial position of the armature disk may change while the distance between the sensor and the shaft end remains fixed. This leads to less than optimal control. In extreme cases, the sensor output might indicate that the shaft is in the desired axial position while the armature disk even touches one of the axial magnetic bearing elements, which may lead to irreversible damage of the magnetic bearing device.

It has therefore been suggested, e.g., in Patent Abstracts of Japan 09-196064, to dispose axial displacement sensors within the axial magnetic bearing. The axial displacement sensors disclosed in that document measure a local displacement of a small surface region of the armature disk which is near the sensor. With this type of sensor, any surface unevenness of the armature disk will lead to large, undesired periodic signals at the sensor output during rotation of the armature disk.

This problem does not occur in EP-A 0 362 882, which suggests to provide a comparatively large sensor coil which is concentric with the control coils in the axial bearing elements. The sensor coil shares its magnetic flux path with the control coil. The flux path of the control coil is defined by a permanent magnet, a pair of pole pieces and the armature disk, and primarily serves to guide the magnetic field generated by the control coil. Both the control coil and the sensor coil are arranged between the pole pieces. When the gap between the armature disk and the pole pieces changes, a variation of the inductance of the sensor coil results. Since the sensor coil shares its flux path with the control coil, the bearing cannot be operated in the full range up to saturation without compromising sensor operation. This is because meaningful operation of the sensor coil requires linearity of the field-flux relationship, which is not fulfilled at saturation. Furthermore, fast changes in the control currents through the control coils will lead to large induced voltages in the sensor coil, which may negatively affect accuracy and stability of the measurements. Additionally, due to the large area enclosed by the sensor coil, the sensor will be susceptible to external magnetic disturbances.

### Summary of the invention

It is therefore an object of the present invention to provide a distance sensor which is suitable for determining the distance to a conducting surface in the presence of external magnetic fields, and in particular for determining the axial position of a thrust disk, without being overly affected by changes in the external flux and by external disturbances. It is another object of the present invention to provide a multiple-purpose sensor unit and a magnetic bearing device comprising such a sensor. It is yet another object of the present invention to provide a method of operation of such a bearing device.

These objects are achieved by a distance sensor with the features laid down in claim 1, a sensor device according to claim 8, a magnetic bearing device with the features laid down in claim 11, and a method of operation with the features laid down in claim 17. Advantageous embodiments of the present invention are laid down in the dependent claims.

Thus, according to the present invention, the distance sensor is of the eddy-current sensor type and comprises a set of at least two essentially coplanar sensor coils. Preferably, the coils are nested (interleaved) such that, starting with an innermost coil and counting radially outside, each subsequent coil encloses all previous coils. In any case, the outermost of these coils encloses all other coils of the set, and the innermost of the coils is enclosed by all other coils in the set. Preferably, but not necessarily, the coils are essentially concentric. Obviously, the area enclosed by the outermost sensor coil is larger than the area enclosed by the innermost sensor coil. Thus, in the sensor plane, three regions can be distinguished: a region which radially extends between the innermost and outermost coils; the region enclosed by the innermost coil; and the region extending radially outside of the outermost coil. The sensor coils are operated together as an eddy-current sensor by suitable operating means. The operating means will generally supply time-dependent currents to at least one, preferably all, of the coils and derive a measure for the impedances of this and/or other coils from their response to the currents. These currents are preferably high-frequency AC currents, more preferably sinusoidal AC currents, the frequency being preferably in the radiofrequency range. However, also the use of current pulses is possible. By the currents, magnetic fields are generated in the vicinity of the sensor coils to which the currents are supplied. If other coils are present to which no currents are directly supplied, voltages will be induced in these coils which, if a closed current path exists, may cause additional current flow, in a similar manner as in a transformer. According to the invention, the operating means are adapted for operating the sensor coils in a manner that, in the sensor plane, the fields generated by the different coils cancel at least partially in the region enclosed by the innermost coil and in the region extending radially outside of the outermost coil. Advantageously, in the region enclosed by the innermost coil, the innermost coil acts to reduce the total field generated by all other coils together. Analogously, in the region extending radially outside of the outermost coil, the outermost coil advantageously acts to reduce the total field generated by all other coils. On the other hand, advantageously the fields generated by the different coils at least partially add up constructively in the region between the coils. By the way of example, if only two coils (an inner and an outer coil) are present, the field which is generated by both coils together in the region between the coils is advantageously larger than the field which is generated by the outer coil alone. In this way, the field is "concentrated" in the region between the coils. Therefore, this region may be called the "active sensor region".

There are many different ways of arranging the sensor coils and accordingly adapting the operating means in order to achieve this "field concentration". One possible way is to ensure that the currents which flow in adjacent nested coils have opposite senses of flow (right-handed vs. left-handed) around the normal vector of the sensor plane. A particularly simple way of implementing this is by connecting the coils in series or in parallel in a fashion that ensures that currents in adjacent coils flow in mutually opposite senses around the normal vector.

Field concentration to the active sensor region may also be achieved by short-circuiting at least one of the (preferably nested) sensor coils. By shorting one or more of the coils, a current change in a nearby coil will induce a current change in the shorted coils. The induced current leads to a magnetic field around the shorted coil. Dependent on the geometric arrangement of the coils, this leads to a reduction of the overall field inside or outside of the shorted coil compared to a situation in which the shorted coil would not be present. Preferably, if coils are short-circuited, these include the innermost and/or the outermost coil. In a variant, two or more coils may be connected in a series configuration, and the resulting series circuit may then be short-circuited.

Excitation and detection may be performed by the same or by separate coils. In a preferred embodiment, the same coils are used for excitation (generation of time-dependent magnetic fields) and detection (pickup of induced voltages). However, it is also possible to have separate sets of excitation and pickup coils for these purposes. The set of pickup coils preferably also adopts an essentially coplanar configuration. In this case, detection means will be connected to the set of pickup coils. The two sets (excitation coils and pickup coils) may be arranged in two layers on top of each other or may be in the same plane. Advantageously, the pickup coils are connected in a manner that any flux change in the region enclosed by the innermost of these coils leads to an attenuated output compared to a flux change in the region between the innermost and the outermost of these coils.

The sensor coils may be placed in the immediate vicinity of the armature disk of a magnetic bearing device. Thereby, the position of the armature disk is measured directly, and thermal expansion of the rotary shaft will not affect this measurement. If the coils are placed concentrically with the axis of rotation of the armature disk, the effects of any surface unevenness of the armature disk are cancelled. Furthermore, it is easily possible to position the coils in such a way that the magnetic flux path of the control coil does not pass through the active sensor region. Thus, rapid changes in control current and saturation effects in the control flux path will only weakly affect the sensor output. Saturation effects may further be avoided by operating the coils essentially as air-core coils.

Preferably, the sensor coils are located in a region essentially enclosed by the axial bearing element and the armature disk, e.g., in an annular recess provided in the face of the axial bearing element facing the armature disk. Such an arrangement is possible because of the flat, coplanar design of the set of sensor coils.

In a special embodiment, the pole piece of the control flux path comprises two annular end faces facing the armature disk, each end face defining a control flux gap with the armature disk. It is then preferred that the sensor coils are radially disposed between the annular end faces. Alternatively, the sensor coils could be placed in the region which extends radially between the rotary shaft and the axial magnetic bearing element or radially outside of the axial magnetic bearing element, e.g. near the outer edge of the armature disk. The exact placement may be chosen dependent on the available space.

Usually, the magnetic bearing device will further comprise a second active axial bearing element which is disposed on the opposite side of the armature disk. Not only in this case it is advantageous to have another set of sensor coils on the side of the armature disk opposite to the first set of sensor coils, preferably with the same radii as the first set of sensor coils. This arrangement enables differential operation of the two sets of sensor coils and makes the whole arrangement less susceptible to external disturbances and temperature effects. Alternatively, a second set of sensor coils may be provided together with a dummy target.

Additionally, the present invention relates to a novel type of rotation sensor for determining the rotary state of a rotor rotating around a rotation axis. Known sensors for this purpose can be bulky and, in particular, the parts of the sensor to be placed close to the rotor may have a thickness which is greater than desired. It is therefore another object of the present invention to provide a rotation sensor for determining a rotary state of a rotor whose parts to be brought close to the rotor can adopt a flat configuration.

This object is achieved by a rotation sensor with the features of claim 7. Thus, the rotation sensor, which again may be regarded as an eddy-current sensor, comprises a primary coil which is disposed essentially around the rotation axis of the rotor, a plurality of secondary coils disposed in the vicinity of the primary coil, and operating means which comprise means for supplying a time-dependent current to the primary coil and detection means for detecting an induced voltage in the secondary coils and for supplying an output signal depending on the rotary state. Advantageously, the primary and secondary coils are essentially coplanar. They may be implemented as a common printed circuit board. In one possible embodiment, the coils may adopt a similar configuration as the device of WO 2004/048883; however, while in that document the sensor served for determining distances, it has been realized by the inventors that a similar arrangement of coils can also be used for determining a rotary state provided that the rotor is not axially symmetric. Thus, an important difference between the present sensor and the device of WO 2004/048883 is the way in which the coils are connected and/or operated. In particular, the operating unit of the present sensor is designed for delivering an output signal which reflects the rotary state rather than a measure of a distance.

The quantity determined by the sensor which carries information about the rotary state may be, in the simplest embodiment, a voltage pulse for each full or half rotation (from which, e.g., the rotation frequency may be determined). Such a kind of sensor is commonly called a "pulse sensor". In more sophisticated embodiments, a better resolved measure of the angular position, such as the rotation phase, may be provided by the sensor. Such sensors are commonly called "resolvers".

Advantageously, the rotation sensor for determining the rotary state of the rotor may be combined with a distance sensor according to the present invention to form a dual-purpose sensor device as laid down in claim 8.

In an advantageous embodiment of this sensor device, the primary coil of the rotation sensor is formed by a sensor coil of the distance sensor. One of several advantages of such a configuration is that only one source of a time-dependent current, such as an oscillator, is then needed, and a very compact design can be achieved. The coils of both sensors may be integrated on a single printed circuit board.

Preferably, the secondary coils of the rotation sensor are disposed between the outermost and the innermost sensor coil of the distance sensor.

The rotation sensor is preferably employed in a magnetic bearing device, and therefore the present invention also relates to a magnetic bearing device with the features of claim 16.

### Brief description of the drawings

The invention will be described in more detail in connection with exemplary embodiments illustrated in the drawings, in which
- Fig. 1: shows a highly schematic side view of a magnetic bearing device according to the prior art;
- Fig. 2: shows a schematic partial side sectional view of an axial bearing according to the present invention;
- Fig. 3: shows a schematic view of the field lines of the control flux path;
- Fig. 4: shows a schematic top view of a lower axial magnetic bearing element with a pair of sensor coils disposed thereon;
- Fig. 5: shows a schematic wiring diagram of an operating unit;
- Fig. 6: shows a schematic view of a pair of sensor coils in series configuration, together with their operating unit;
- Fig. 7: shows a schematic view of a pair of sensor coils in parallel configuration, together with their operating unit;
- Fig. 8: shows a schematic view of a pair of sensor coils operated independently, together with their operating unit;
- Fig. 9: shows a schematic view of a sensor comprising four sensor coils;
- Fig. 10: shows a schematic view of a set of three sensor coils in series configuration, together with their operating unit;
- Fig. 11: shows a schematic view of a set of three sensor coils in a different configuration, together with their operating unit;
- Fig. 12: shows a schematic wiring diagram of two pairs of sensor coils together with their respective operating units;
- Fig. 13: shows a schematic view of a first embodiment of a dual-purpose sensor device according to the present invention;
- Fig. 14: shows a schematic wiring diagram for the embodiment of Fig. 13;
- Fig. 15: shows a schematic view of a second embodiment of a dual-purpose sensor device; and
- Fig. 16: shows a schematic view of a third embodiment of a dual-purpose sensor device.

### Detailed description of the invention

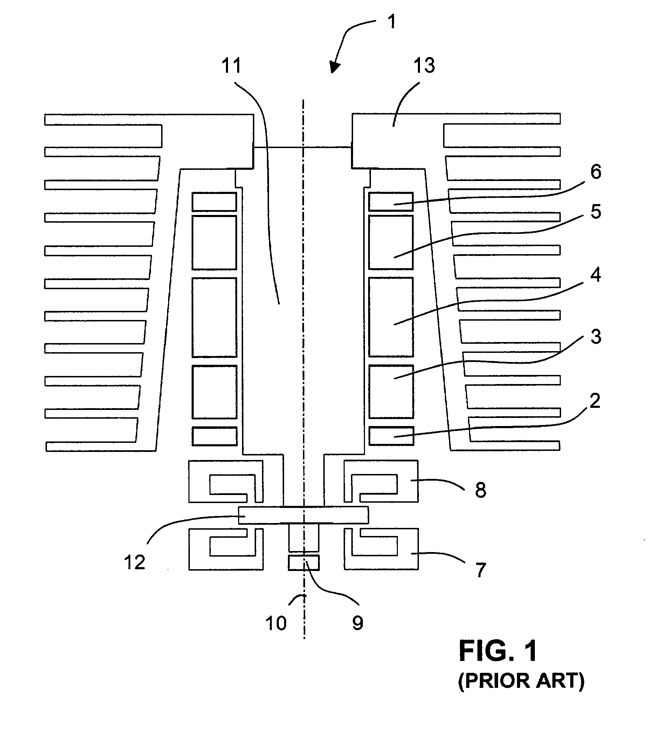

Fig. 1 shows a highly schematic diagram of a magnetic bearing device 1 as it is known from the prior art. In the magnetic bearing device 1, a rotor is suspended for rotation about an axis 10. The rotor comprises a rotary shaft 11 and, as an example for a load, a rotor body 13 carrying a plurality of pump blades of a turbo-molecular pump.

Rotation is driven by a motor unit 4. For suspending the rotor magnetically, a lower radial bearing unit 3, an upper radial bearing unit 5 and a pair of axial bearing units 7, 8 are provided. The lower and upper axial bearing units 7, 8 cooperate with the lower and upper faces, respectively, of a thrust disk 12 mounted on the rotary shaft 11. Radial displacements of the rotary shaft from the desired position are determined by a lower and an upper radial displacement sensor unit 2 and 6, respectively. Axial displacements are measured by an axial displacement sensor 9.

In the prior-art embodiment of Fig. 1, the axial displacement sensor 9 is mounted below the bottom end of the rotary shaft, at a certain distance from the thrust disk 12, and its target is attached to the bottom end of the shaft. The sensor is generally calibrated such that it gives zero output when the thrust disk is in its desired axial position at ambient conditions. However, in operation, the section of the rotary shaft 11 which extends between the axial displacement sensor 9 and the thrust disk 12 may expand thermally due to heating, and the calibration will not be correct any more. In particular, when the sensor gives zero output, the thrust disk will be closer to the upper axial bearing unit 8 than to the lower axial bearing unit 7. Specifically, this is a problem if a control is implemented which compensates for nonlinearities of the axial bearings, since a correct application of such a linearization requires knowledge of the exact position of the thrust disk. If the sensor reading is offset relative to the position of the thrust disk, linearization will not work correctly any more.

Furthermore, in the prior art arrangement, if the axial sensor is placed at one end of the rotor shaft, it is disadvantageous to place the thrust disk near the opposite end for the above reasons. This is an undesirable design restriction. Additionally, in some applications, the sensors cannot be mounted facing the end of the rotor shaft because both rotor ends are needed for mounting a load, as may be the case, e.g., with radial compressor wheels.

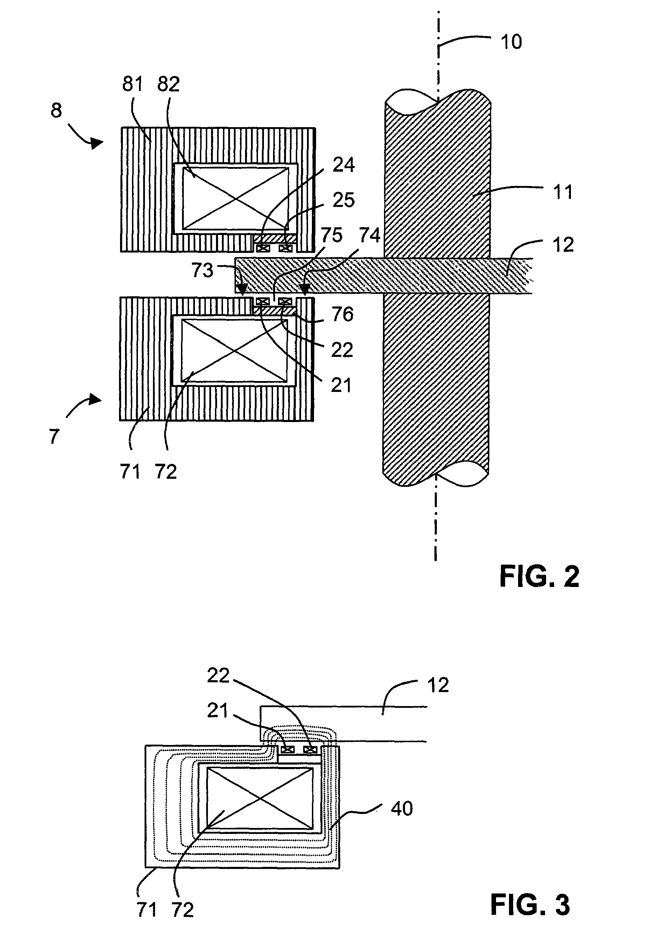

Therefore, the present invention suggests to provide a sensor suitable to be accommodated in the immediate vicinity of the thrust disk 12. Fig. 2 shows a schematic side sectional view of the relevant parts of a magnetic bearing device which is similar to the device of Fig. 1, but which is equipped with a sensor according to the present invention. Only the rotary shaft 11, the thrust disk 12 and the axial bearing units 7, 8 together with sensor coils 21, 22, 24 and 25 are shown for simplicity.

In the following, the construction of the axial bearing units will be described with reference to the lower axial bearing unit 7. The axial bearing unit comprises a pole piece 71 and a control coil 72. The pole piece 71 is usually manufactured from a ferromagnetic material. With its outer and inner annular end faces 73, 74, the pole piece forms two gaps with the thrust disk 12, which itself is usually also ferromagnetic, at least in a region facing the pole piece. The pole piece 71, the outer gap, the thrust disk 12 and the inner gap together constitute a closed magnetic flux path for the magnetic fields generated by the control coil 72.

This magnetic control flux path is illustrated very schematically in Fig. 3, where typical flux lines 40 for the magnetic field generated by the lower control coil 72 are shown. Importantly, in the region of the gaps, the flux is essentially restricted to the gaps themselves, and the magnetic field strength (flux density) rapidly decreases away from the gaps in the radial direction. The principles of operation of such a reluctance-type axial bearing unit are well-known in the art.

In the region which extends radially between the gaps and axially between the thrust disk 12 and the control coil 72, a pair of sensor coils 21, 22 is provided. Each of the sensor coils is concentric with the control coil 72, i.e., both sensor coils enclose the rotary shaft as does the control coil 72. The sensor coils are disposed in an annular recess 75 of the bearing unit 7 and are mounted on a non-conducting, non-magnetic ring 76.

The same construction is chosen for the upper axial bearing unit 8 (upper pole piece 81, upper control coil 82, upper sensor coils 24, 25). While in Fig. 2 both the upper and lower axial bearing units are shown as having the same size and shape, the size and shape of the upper axial bearing unit 8 does not necessarily need to be identical to the lower axial bearing unit 7.

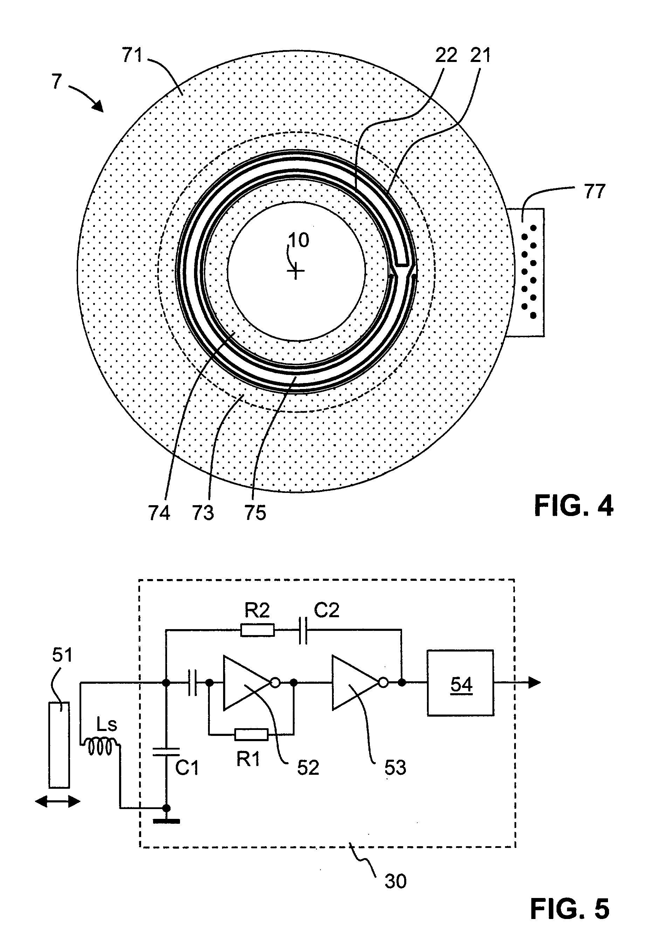

Fig. 4 shows a schematic top view of the lower axial bearing unit 7 together with the sensor coils 21, 22. For simplicity, each of the coils is drawn with only two turns. In reality, the number of turns may vary and will often be somewhat higher than two, e.g., between four and ten. In addition, a connector 77 for establishing the electrical connections of the control coil and/or the sensor coils is shown. The coils are connected in series such that any current flowing through coil 21 will have the opposite sense of flow around axis 10 compared to the current flowing through coil 22.

The sensor coils are operated together as an eddy-current sensor. Design principles and practical electronic circuits for eddy-current sensors are well known in the art. An overview is given, e.g., in the article by S.D. Roach, "Designing and Building an Eddy Current Position Sensor", SENSORS, September 1998 (ISSN 0746-9462; published monthly by Advanstar Communications Inc., 1 Phoenix Mill Lane, Suite 401, Peterborough, NH 03458, 603-924-5400). Generally speaking, in an eddy-current sensor, an AC current is supplied to the sensor coil. The resulting AC magnetic field around the sensor coil will induce eddy currents in a surface region of any electrically conducting element close to the coil (the target region). These currents diminish the magnetic field generated by the coil and thus its inductance. In addition, the eddy currents dissipate energy, also changing the ohmic part of the impedance of the coil. The closer the sensor coil to the target region, the stronger the eddy currents, the lower the inductance, the higher the ohmic losses, and the lower the quality factor Q. These changes can be monitored in a variety of different ways well known in the art.

Just by the way of example, the coil may be connected in parallel to a capacitance (which may be, e.g., the capacitance of the cable connecting the coil to the driving electronics), resulting in a resonant circuit. This circuit may be excited by an oscillator which operates at the circuit's parallel resonance, and the resonance frequency may then be monitored. Changes in the distance between coil and target will lead to a changed resonance frequency of the resonant circuit due to a change in the inductance of the coil.

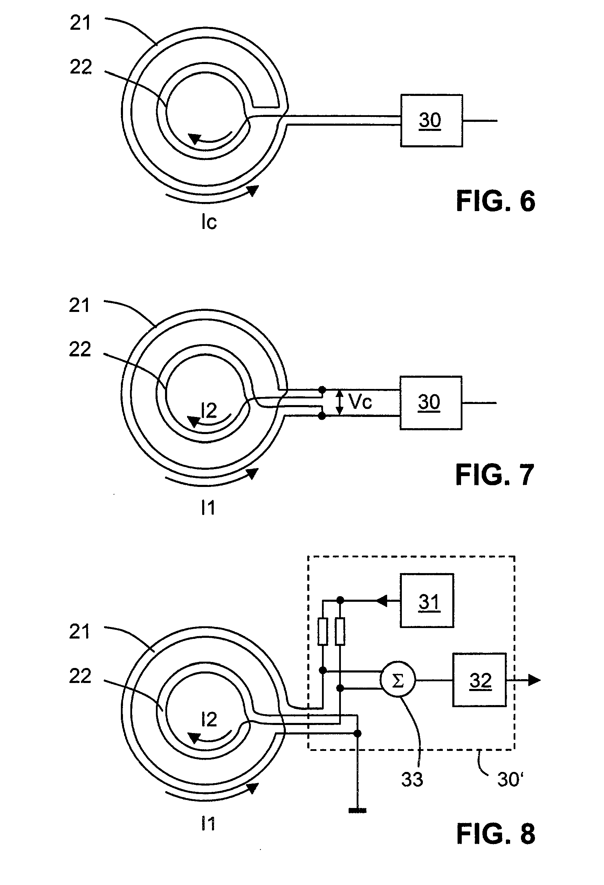

A particularly simple implementation of an eddy-current sensor with its operating unit is shown in Fig. 5. The set of sensor coils is collectively designated by the inductance Ls. This inductance varies with the distance to a metallic target 51, which in the present application is provided by the armature disk 12. The operating unit 30 is essentially implemented as a gate oscillator followed by a frequency counter 54. The gate oscillator will oscillate at the parallel resonance of the resonant circuit formed by inductance Ls and capacitance C1. At the output of the operating unit, the resonance frequency is provided in digital form. This frequency being a measure for the inductance Ls, a measure for the distance of the sensor coils to the target 51 is provided. In this particular example, the gate oscillator is set up as a set of two (CMOS) inverters 52, 53 with large positive feedback for AC signals via resistor R2. Resistor R1 and capacitance C2 provide a negative feedback for DC signals in order to control the operating point of gate 52.. An example for such a gate oscillator is disclosed in the above-mentioned article by S.D. Roach in "SENSORS" in the section entitled "Circuit Design", and reference is made explicitly to that section for design considerations of the operating unit.

Different examples for how an eddy-current sensor may be operated are disclosed in GB-A 1 512 799 (see Figs. 1, 3, 4, 6 and 7 for different implementations and the corresponding description on page 2, line 32 to page 5, line 40) and in GB-A 2 054 867 (see Fig. 2 and the corresponding description on page 1, line 99 to page 3, line 38), and reference is made explicitly to the disclosure of these documents for teaching implementations of operating units for eddy-current sensors.

It is obvious that many other implementations of the operating unit are possible. What all implementations will have in common is that, in general, at the output of the operating unit, an analogue or digital signal is provided which is a measure of the distance between the sensor plane and the target.

Figs. 6 to 8 show three different examples of how the sensor coils may be connected to an operating unit in order to ensure that magnetic fields at least partially cancel inside the inner sensor coil 22 and outside the outer sensor coil 21. It is to be understood that these drawings are highly schematic and that, in particular, the sensor coils may have a different number of turns than two.

In Fig. 6, the coils are connected in series, as they are in Fig. 4. This ensures that, if at some moment in time a common coil current lc flows, say, in clockwise direction in the inner coil 22, it will flow in counterclockwise direction in the outer coil 21, and vice versa. Therefore, the magnetic fields generated in the outer and inner coils 21, 22 add up constructively in the region between the coils, while they cancel partially in the regions outside the outer coil 21 and inside the inner coil 22. Thus, the total magnetic field will be highest in the region between the coils. Eddy currents in the target will therefore develop mainly in the surface region of the target which faces the region between the coils. It is also in this sense that the region between the coils is called the "active sensor region".

At the same time, this ensures that the effects of external magnetic disturbances are minimized. Any flux change in the area enclosed by the inner coil 22 will induce the same voltage in coils 21 and 22. By connecting the coils in series with opposite sense of current flow, these voltages will cancel, and only flux changes in the region between the two coils will lead to an appreciable voltage at the ports of unit 30 to which the coils are connected. Therefore, the active sensor region is the only region sensitive to flux changes.

Another possibility of connecting the coils is shown in Fig. 7, where the coils are connected in an antiparallel fashion, i.e. in parallel in such a way that a common coil voltage Vc at the ports of the operating unit 30 causes a current I1 through the outer sensor coil 21 which flows around the common centre of the coils with opposite sense than the corresponding current 12 through the inner sensor coil 22.

The sensor coils may also be operated separately by a different type of driving unit 30', as illustrated in Fig. 8. Both sensor coils are driven separately in a phase-coherent manner by a common driving unit 31 in such a way that the AC currents I1, I2 in the coils flow in mutually opposite senses around their common centre. The coil voltages are added in an adder 33 (possibly after weighting), and the result is fed to a detection unit 32.

In the configuration of Fig. 4, both coils enclose the annular inner end face 74 of the pole piece 71. A change of current in the control coil will lead to a flux change through this end face and to corresponding induced voltages in both the inner and outer sensor coils 21, 22. In Fig. 4, these voltages are cancelled by connecting the coils in series in the manner shown in Fig. 6. However, also with any of the configurations shown in Fig. 7 and 8, these induced voltage are cancelled.

By accommodating both coils in the region radially enclosed by the inner and outer end faces 73, 74 of the pole piece, as shown in Fig. 4, it is avoided that flux from the magnetic control circuit passes through the active sensor region. Of course, it is unavoidable that some fringe fields of the control coil 72 extend through the active sensor region despite the guiding of the field lines in the pole piece 71 of the control coil 72 and in the armature disk 12. However, for avoiding large induced voltages the flux through the active sensor region should be only a small fraction (preferably less than 10% or even less than 2%) of the total flux generated by the control coil.

Moreover, the magnetic flux path of the AC magnetic fields generated by the sensor coils 21, 22 is well separated from the magnetic flux path of the control coil 22. To this end, in the present embodiment the two sensor coils are essentially air-core coils (disregarding the presence of the thrust disk 12). In the absence of pole pieces for the sensor coils, the AC magnetic flux density generated by the sensor coils will rapidly fall off radially, and only a small flux density will be present in the region of the pole piece 71 for the control coil 72. This avoids interference with saturation effects which might arise from the strong magnetic field of the control coil and which would lead to a malfunctioning of the sensor.

In other applications, however, it might be preferred to provide a pole piece for the sensor. It should then be ensured that the magnetisation in such a pole piece will not be saturated by the stray fields of the axial bearing in the course of operation of the sensor.

Cross-talk from the control currents to the sensor output is further minimized by the usual measures known in the art, specifically, by adequately choosing the operating frequency of the eddy-current sensor and employing some sort of band-pass filtering in the operating unit to filter out "noise" from induced voltages resulting from variations in control current. The operating frequency for the inventive eddy-current sensor will largely depend on the diameter of the sensor coils. Typical operating frequencies are in the range from about 100 kHz to about 10 MHz, preferably about 300 kHz to about 1 MHz. In very small systems (outer diameter of the outer coil in the range of 10 mm or less), however, the frequency may even exceed 20 MHz.

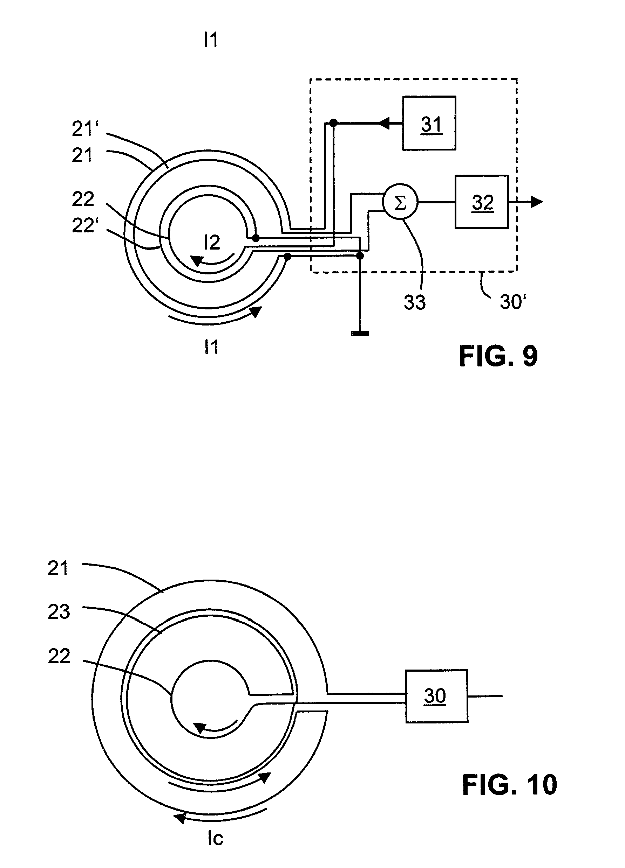

Fig. 9 shows an example of an embodiment in which excitation and detection are effected by different coils. AC currents are supplied to coplanar excitation coils 21, 22 with opposite senses of current flow. Pickup coils 21', 22' are provided in the vicinity of the excitation coils 21, 22. The pickup coils 21', 22' may be arranged in the same plane as the excitation coils or in a second plane immediately above or below the plane of the excitation coils. As in Fig. 8, the pickup coils are connected to an adder 33 which determines the (possibly weighted) sum of the coil voltages. In such an embodiment the driving unit 31 may be a current source (rather than a voltage source), and the input impedance of the circuitry for detection can be made very high. This leads to a minimization of the effects of changes in the specific resistivity of the coil material, as they may result, e.g., from temperature changes. In other words, the effect of temperature changes are minimized. These advantages are analogous to the advantages of the well-known four-point configuration in a classical measurement of resistances.

As an example of a sensor with more than two sensor coils, Fig. 10 illustrates an implementation with three sensor coils 21, 22, and 23. For clarity, the coils are drawn very schematically and with only one or two turns, while the number of turns per coil may be higher than one or two, e.g. ten for the outer and inner coils 21, 22 and twenty for the middle coil 23. Preferably, the number of turns of the middle coil 23 is approximately doubled as compared to the outer and inner coils 21, 22. The coils are connected in an "anti-series" configuration, which is a generalization of the configuration of Fig. 6. The common coil current Ic flowing through the sensor coils 21, 22, 23 has opposite senses of flow around the common centre of the coils in adjacent sensor coils. As a consequence, the magnetic fields generated by the coils partially cancel in the region inside the innermost coil 22 and outside the outermost coil 21. From the foregoing, it is obvious that other possibilities for connecting the coils together exist, e.g., in a parallel fashion or in any other way which causes currents in adjacent sensor coils which have opposite senses of flow around the common centre. It is further obvious that it is possible to employ four or more coils instead of three.

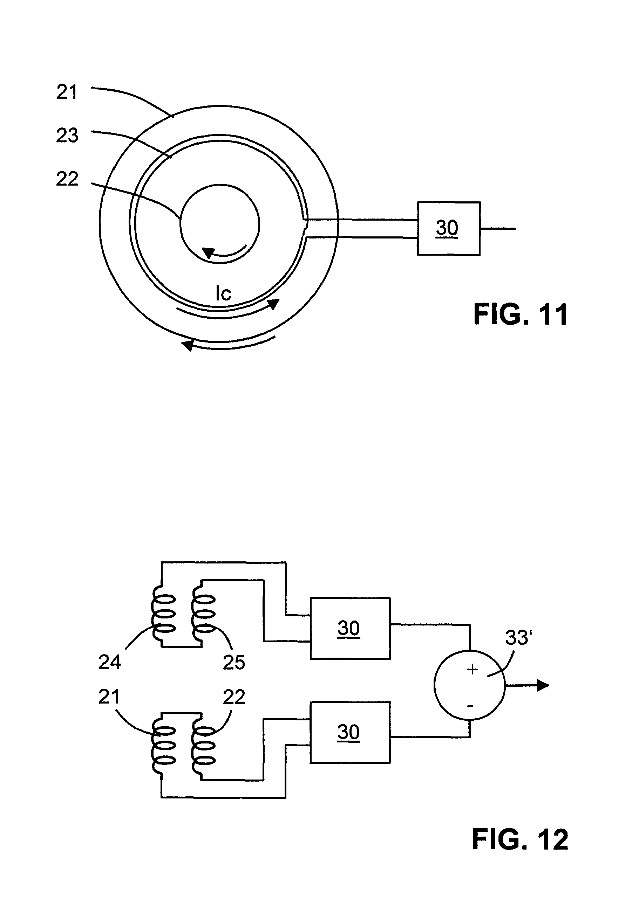

Instead of feeding a current directly to all coils in the set of sensor coils, it is also possible to generate currents in some of the coils purely by induction from other coils. This is illustrated by the way of example in Fig. 11. The operating unit 30 provides a current Ic only to the middle of three nested coils 21, 22, 23. The outer and inner coils 21, 22 are shorted. By induction from the middle coil, currents will be induced in the outer and inner coils 21, 22 which flow in the opposite sense around the plane normal than the current Ic. These induced currents generate magnetic fields which act to decrease the total magnetic field in the region radially outside of coil 21 and inside coil 22, compared to a situation in which the shorted coils would not be present, i.e., the fields which result directly and indirectly from the current Ic partially cancel in these regions. While such an arrangement is very simple, the influences of external magnetic fields will be stronger than in a situation in which currents are directly applied to all coils. Instead of shorting each of the coils 21, 22 separately, these two coils may be connected in series, and the resulting series circuit may be shorted as a whole.

In Fig. 2, two pairs of sensor coils 21, 22 and 24, 25, respectively, were shown, the second pair of sensor coils being disposed in the upper axial bearing. Fig. 12 illustrates, in a highly schematic manner, how these two pairs may be operated to measure the axial displacement of the thrust disk with improved accuracy. Each pair of coils is operated by its respective operating unit 30 as an eddy-current sensor. The output value (e.g., a voltage or a digital value) of each operating unit is a measure of the respective distance between the sensor plane and the thrust disk. These outputs are subtracted in an (analogue or digital) adder unit 33'. If the thrust disk is centred between the upper and the lower axial bearing unit, both operating units will have the same output, and the output of the adder will be zero. If the thrust disk moves closer to the upper axial bearing unit, the upper operating unit 30''' will give a higher output value than the lower operating unit 30. Consequently, there will be a positive output value of the adder 33'. In this way, the output of the adder 33' represents a true measure for displacement of the thrust disk from the desired (central) axial position.

This value will be very little influenced by ambient conditions such as temperature. For a single pair of coils 21, 22 connected in series or in parallel and operated as an eddy-current sensor, temperature drift might be a serious source of error. The drift of the coils' inductance can be in the range of more than 100 ppm/K, and drift of ohmic resistance can even well exceed 1000 ppm/K. While it is possible to correct for temperature drift, e.g., by determining the temperature independently, it is preferable to have an inherent temperature compensation like in the configuration of Fig. 12. Any change in ambient conditions such as temperature will affect both pairs of coils 21, 22 and 24, 25, respectively, in the same manner, and any output changes of the two operating units 30 due to such changes will be cancelled by the adder 33'. In summary, by combining two pairs of coils, easy calibration and good temperature compensation are achieved.

Instead of employing an adder 33', it is also possible to operate the two pairs of coils in an AC bridge circuit similar to the circuit shown in Fig. 3 of EP-A 0 362 882.

Instead of providing a second set of coils 24, 25 within the upper axial bearing, such a set of coils could also be provided in another place in the vicinity of the first set of coils 21, 22 and operated against a fixed conductive target. The position of the second set of coils would again be chosen such that any external influences such as temperature changes will be similar for both sets of coils.

Differential operation of two sets of sensors is also possible, e.g., if a second armature disk is present and the second set of sensors is disposed near the second armature disk.

The sensor coils can be wound from wire, or they can be manufactured in form of a printed circuit board (PCB). A PCB has the advantage of easy, reproducible manufacture (especially at the rather large size required for the present application) and low cost. Additionally, a PCB can be easily positioned in the magnetic bearing device. Exact positioning may otherwise be difficult, especially in small systems.

As an example, a pair of sensor coils was manufactured with the following characteristics:

| | |
|---|---|
| Material: | Copper wire |
| Wire diameter: | 0.2 mm |
| Average diameter of outer coil: | 58 mm |
| Average diameter of inner coil: | 51 mm |
| Number of turns: | 4 for each coil |

The sensor coils were placed into an annular recess in the lower axial bearing unit of a magnetic bearing device (diameter of the thrust disk: 70 mm). The sensor coils were connected in series in the manner shown in Figs. 4 and 6 and were operated in a resonance circuit with a capacitor of 2.2 nF in parallel. The circuit was operated at a frequency of approximately 2 MHz, and its damping was monitored. No distortion of the sensor signal was observed even if the bearing was saturated completely.

While the sensor of the present invention has been described in connection with determination of axial displacements in a magnetic bearing device, it shall be emphasized that such a sensor is also advantageous in other applications and other contexts. Indeed, the set of sensor coils could be positioned near any suitable target surface. All considerations about suitable ways of connecting and driving the coils apply, mutatis mutandis, also in such a more general situation. Specifically, such a sensor will be of great advantage whenever a distance between the sensor and a surface rotating in a plane is to be determined. Then the sensor coils are preferably of circular shape and arranged concentrically with the rotation axis of the surface. However, it will be appreciated that in a general situation the advantages of the present invention can be obtained also by different geometric arrangements. By the way of example, the coils might be of essentially rectangular shape, which might be more appropriate for determining, e.g., a distance to a body moving linearly.

The present invention also proposes a novel type of rotation sensor. As can be seen from the following description, there are many conceptual similarities to the above-described distance sensor, and indeed both kinds of sensors may be combined into a single dual-purpose sensor device.

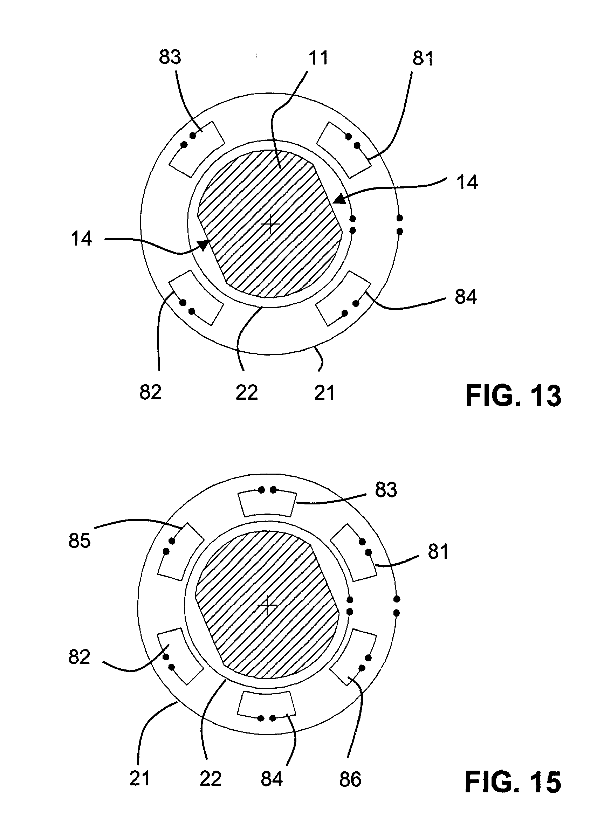

Fig. 13 shows a first example for the arrangement of coils for such a sensor device in a highly schematic manner. A rotary shaft 11 has two symmetric notches 14 which make the shaft deviate from axial symmetry. An armature disk is mounted on the shaft (to be imagined below the paper plane and not shown in Fig. 13). Specifically, the notches 14 may be the notches of a nut with which the armature disk is fixated on the shaft 11. For determining the axial position of the armature disk, two sensor coils 21 and 22 are provided, which are placed immediately above the armature disk and are part of a distance sensor as described above. Additionally, four secondary coils 81, 82, 83 and 84 are provided between the sensor coils 21 and 22, which serve for determining the rotary state of the shaft 11. For simplicity, in this and the following Figures, each of the coils is drawn with only one single turn; in reality, of course, a number of turns larger than one may be chosen.

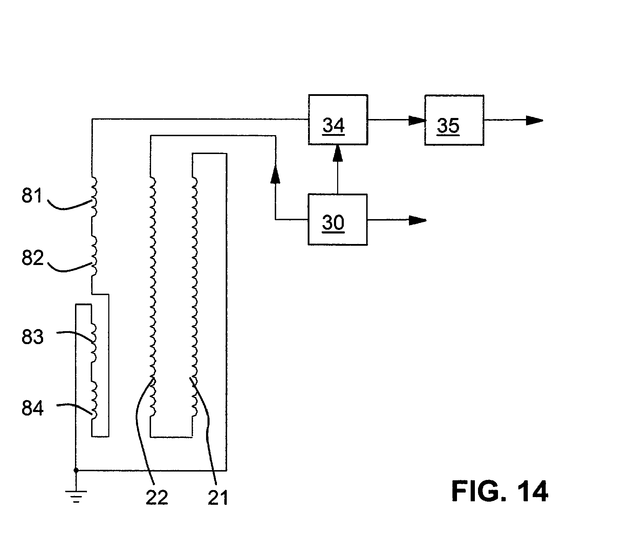

Fig. 14 illustrates a possible way of operating the device. The outer and inner sensor coils 21 and 22 are connected in an (anti-) series configuration as in Figs. 4 and 6. An operating unit 30 operates the sensor coils 21 and 22 as a distance sensor in the manner described above in connection with those Figures. In particular, the operating unit 30 provides a high-frequency AC current to the sensor coils 21 and 22 and monitors their impedance in order to determine their distance to the armature disk.

By the high-frequency current in the inner coil 22, a high-frequency magnetic field is generated inside of the inner coil 22. While this field is somewhat diminished by the field generated by the outer coil 22, which has an opposite direction in this region, there will still be an appreciable net field in the immediate vicinity of the inner coil 22. This net high-frequency magnetic field will generate eddy currents in the shaft portion immediately inside the inner coil 22 which tend to counteract the external magnetic field. As explained above, the eddy currents lead to changes in inductance and ohmic damping of both the sensor coils 21 and 22 as well as the secondary coils 81, 82, 83, and 84. Because the sensor coils 21 and 22 are essentially concentric with the shaft 11, the position of the notches 14 does not strongly influence the electrical properties of the sensor coils 21 and 22. However, the rotary position of the notches will strongly influence the secondary coils 81, 82, 83, and 84. The sensor coils 21 and 22 act as primary coils which will induce secondary voltages in the secondary coils 81 to 84, and these secondary voltages will strongly depend on the position of the notches. The magnitude of these voltages can therefore be used to determine the rotary state of the rotor.

In the embodiment of Fig. 14, the secondary coils are connected in a particular manner so as to simplify readout of the coils as much as possible. Each pair of coils on diametrically opposite sides of the shaft (i.e., the pair of coils 81 and 82 as well as the pair of coils 83 and 84) are connected in series-aiding configuration. By this, symmetric changes of the induced voltages in each pair add up, while antisymmetric changes are cancelled. This ensures that the sensor output will be largely independent of any radial displacements of the rotary shaft 11, as such displacements increase the induced voltage in one coil of each pair approximately by the same amount by which the induced voltage in the other coil of the pair is decreased. On the other hand, since the notches 14 are disposed symmetrically on both diametrically opposite sides of the shaft 11, the effects of the notches on the coils of each pair add up. The two pairs of coils are then connected together in an anti-series configuration. This ensures that the effects of a rotation of the notches on the total voltage across the resulting arrangement of coils is maximized. This voltage is fed to a demodulator 34, where it is demodulated with the frequency of the exciting current which is provided by unit 30. At the output of the demodulator, a low-frequency voltage is provided which varies according to the angular position (rotary state) of the rotor. This voltage may be processed in a variety of ways in order to derive analogue or digital information about the rotation angle or rotation frequency. Just by the way of example, in a particularly simple embodiment this voltage is fed to a unit 35 serving as a discriminator, which provides a digital voltage pulse for each half revolution of the rotor ("pulse sensor"). In a more sophisticated embodiment, the unit 35 may derive more detailed angular information from the value of the voltage at the output of the demodulator 34 ("resolver"). For both cases it is clear to a person skilled in the art how unit 35 may be implemented.

It is to be noted that, due to the twofold symmetry of the rotor, it is not possible to distinguish between angular positions which are 180° apart. While this may be a drawback in some applications, the twofold symmetry of the rotor ensures that unbalance is avoided. If unbalance is a minor concern, however, it is easily possible to adapt the sensor to the case of a rotor without twofold symmetry, which would then be able to resolve the angular position without restriction to half-rotations. Of course, the coils would then advantageously be connected in a different way than in Fig. 14. In any case, it is possible to detect and process the induced voltage of each coil independently.

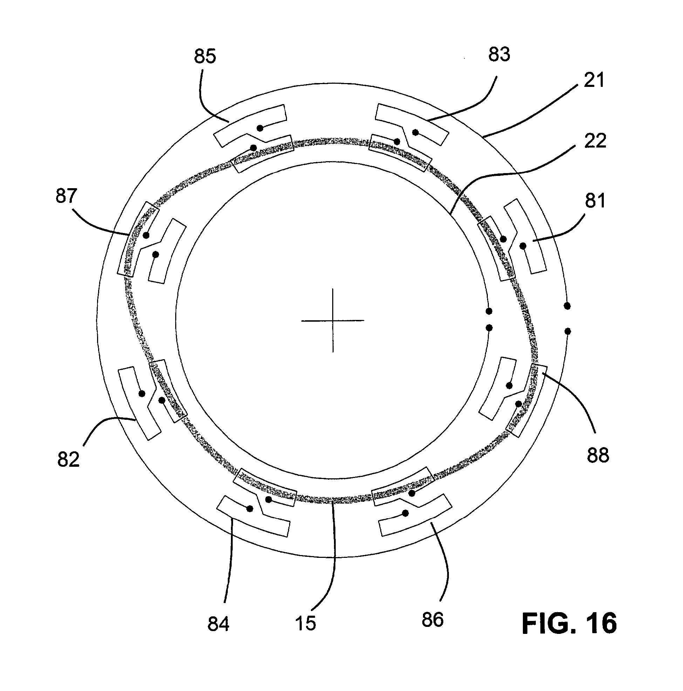

Fig. 15 shows a different arrangement of the secondary coils. Instead of four secondary coils, six such coils 81, 82, 83, 84, 85 and 86 are provided. Each pair of coils on diametrically opposite sides of the rotary shaft 11 may again be connected in series. The resulting three pairs of coils may then be connected in the same manner as the windings of a three-phase induction generator, and the rotary state of the rotor may be determined from comparing the voltages in this three-phase system by methods well-known in the analysis of other three-phase systems such as power supplies.

Again, and especially if the rotary shaft 11 does not possess two-fold symmetry, each of the six secondary coils may be operated independently, and the rotary position of the rotor may be determined from the six independent voltages induced in these coils.

Of course, the scheme may be generalized to any different number of secondary coils and to cases in which the rotor possesses a symmetry which is higher than two-fold. Advantageously, the coils are arranged in a symmetric arrangement which reflects the symmetry of the rotor, as in the above examples. A higher number of coils may lead to increased angular resolution, however at the cost of somewhat more complicated cabling and signal processing.

Fig. 16 shows yet another embodiment of a sensor device combining an axial displacement sensor and a rotary sensor. In this arrangement, the shaft is assumed to be axially symmetric, at least in the vicinity of the sensor plane. However, it is assumed that there is a particularly shaped notch 15 in the face of the thrust disk which faces the coils. Again, coils 21 and 22 act as the sensor coils of the axial displacement sensor, as described above. At the same time, they act as primary coils for the rotation sensor. A plurality of secondary coils 81, 82, 83, 84, 85, 86, 87 and 88 for the rotation sensor are provided, whose arrangement is specifically adapted to the shape of the notch 15. Each of the secondary coils comprises two windings with advantageously identical numbers of turns which are placed side-by-side along the radial direction and which are connected in an anti-series configuration. During rotation of the armature disk, the section of the notch 15 which faces each secondary coil moves back and forth between the two windings of each secondary coil. This leads to a strong variation of the induced voltage in each secondary coil, which can again be used to determine the rotary state (angular position) of the armature disk. A particular advantage of this embodiment is that the notch 15 faces the coils in the axial direction rather than being disposed radially away from the coils. This leads to a much improved sensitivity. Sensitivity is further improved by the fact that the notch 15 is in the region of the maximum of the magnetic field generated by the primary sensor coils 21 and 22 (i.e., it faces the "active sensor region" of the axial displacement sensor).

In all these embodiments, advantageously the sensor coils of the axial displacement sensor (which serve as primary coils of the rotation sensor) and the secondary coils of the rotation sensor are implemented as a single common printed circuit board. The different coils may be implemented on the same or on different layers of the same printed circuit board. Alternatively, the coils may be implemented as several printed circuit boards stacked on top of each other. This may cause slight deviations from exact co-planarity; however, such small deviations clearly will not compromise correct operation of the sensors. Implementation as a printed circuit board leads to a particularly simple and robust sensor device which saves space, can be easily positioned with great accuracy, and which can be manufactured at low cost.

In Figs. 13 to 16, the secondary coils were shown to be arranged in the "active sensor region" of the axial displacement sensor, i.e., between the innermost and the outermost sensor coil of that sensor. It will be appreciated that this is in no way required. By the way of example, it is equally well possible that the secondary coils radially overlap with the winding of a primary sensor coil. This may even be advantageous since it may increase the magnitude of the induced voltages in the secondary coils, especially in embodiments of the kind of Figs. 13 or 15, where the notches are inside the inner primary coil.

While in Figs. 13 to 16 one or more of the sensor coils of the axial displacement sensor acted as the primary coil of the rotation sensor, of course the primary coil of the rotation sensor may be completely independent of the axial displacement sensor, and it may be operated at a different frequency than the axial displacement sensor. Indeed, at least in the embodiments of Figs. 13 and 15, a distinct primary coil is not even necessary, since each of the so-called "secondary" coils may at the same time act as its own "primary" coil, i.e., the same coil may be used for excitation and detection.

In all these embodiments, a plurality of demodulator means 34 can be used to provide more information to the discriminator 35 in order to detect the direction of rotation and more accurately the angular position. Such additional information can also be used as a redundancy in order to provide a fail-save system.

### List of reference signs

- 1: Magnetic bearing device
- 2: Lower radial displacement sensor unit
- 3: Lower radial bearing unit
- 4: Motor unit
- 5: Upper radial bearing unit
- 6: Upper radial displacement sensor unit
- 7: Lower axial bearing unit
- 8: Upper axial bearing unit
- 9: Axial displacement sensor
- 10: Axis of rotation
- 11: Rotary shaft
- 12: Thrust disk
- 13: Rotor body
- 14: Notch
- 15: Notch

- 21: Lower outer sensor coil
- 22: Lower inner sensor coil
- 21': Outer pickup coil
- 22': Inner pickup coil
- 23: Middle sensor coil
- 24: Upper outer sensor coil
- 25: Upper inner sensor coil
- Ic: Common coil current
- I1, I2: Coil currents
- Vc: Common coil voltage

- 30, 30': Operating unit
- 31: Driving unit
- 32: Detector unit
- 33, 33': Adder
- 34: Demodulator
- 35: Discriminator

- 51: Target
- 52,53: Inverter
- 54: Frequency counter
- R1, R2: Resistor
- C1, C2: Capacitor
- Ls: Sensor coils

- 71: Pole piece
- 72: Control coil
- 73: Outer end face
- 74: Inner end face
- 75: Annular recess
- 76: Ring
- 77: Connector

- 81, 82, 83, 84, 85, 86, 87, 88: Secondary coils

## Claims

1. Distance sensor for determining a distance between an object and an electrically conducting surface, **characterized in that** said sensor is an eddy-current sensor which comprises
- a set of at least two sensor coils (21, 22, 23) disposed in an essentially coplanar arrangement in a common sensor plane having a normal vector, said set comprising an outermost sensor coil (21) enclosing all other sensor coils of said set, and said set comprising an innermost sensor coil (22) enclosed by all other sensor coils of said set, and
- operating means (30; 30') connected to said set of sensor coils (21, 22, 23), said operating means (30; 30') being adapted for supplying currents to at least one of said sensor coils (21, 22, 23) in a manner such that, in said common sensor plane, magnetic fields generated by said sensor coils (21, 22, 23) as a result of said currents at least partially cancel in a region enclosed by said innermost sensor coil (22) and in a region outside of said outermost sensor coil (21).

2. Distance sensor according to claim 1, **characterized in that** at least two of said sensor coils (21, 22, 23) are nested and connected in series in a fashion that a common current (Ic) flowing through said at least two sensor coils (21, 22, 23) has opposite senses of flow around said normal vector in adjacent sensor coils, or that at least two of said sensor coils (21, 22) are nested and connected in parallel in a fashion that a common voltage (Vc) applied to said at least two sensor coils causes currents (11, I2) in said at least two sensor coils (21, 22) which have opposite senses of flow around said normal vector in adjacent sensor coils.

3. Distance sensor according to claim 1 or 2, **characterized in that** said set of sensor coils comprises at least one sensor coil which is short-circuited.

4. Distance sensor according to one of claims 1 to 3, **characterized in that** the sensor comprises a second set of sensor coils (21', 22') serving as pickup coils and detection means (32, 33) connected to said second set of sensor coils (21', 22') for detecting induced voltages in said second set of sensor coils (21', 22').

5. Distance sensor according to one of claims 1 to 4, **characterized in that** said sensor coils (21, 22, 23) are essentially air-core coils.

6. Distance sensor according to one of claims 1 to 5, **characterized in that** said sensor coils (21, 22, 23) are implemented as a printed circuit board.

7. Rotation sensor for determining a rotary state of a rotor (11, 12) rotating around a rotation axis (10), **characterized in that** said rotation sensor comprises at least one primary coil (21, 22) which is disposed essentially around said rotation axis (10), a plurality of secondary coils (81, 82, 83, 84, 85, 86, 87, 88) disposed in the vicinity of said primary coil (21, 22), and operating means (30, 34, 35) comprising supply means (30) for supplying a time-dependent current to said primary coil (21, 22) and detection means (34) for detecting induced voltages in said secondary coils (81, 82, 83, 84, 85, 86, 87, 88), wherein said detection means are adapted to supply an output signal which depends on said rotary state.

8. Sensor device comprising a distance sensor according to one of claims 1 to 6 and a rotation sensor according to claim 7.

9. Sensor device according to claim 8, **characterized in that** said primary coil of said rotation sensor is formed by at least one of said sensor coils (21, 22, 23) of said distance sensor.

10. Sensor device according to claim 8 or 9, **characterized in that** said secondary coils (81, 82, 83, 84, 85, 86, 87, 88) of said rotation sensor are disposed between said outermost sensor coil (21) and said innermost sensor coil (22) of said distance sensor.

11. Magnetic bearing device (1), comprising
- a rotary shaft (11), said rotary shaft (11) defining an axial direction,
- an armature disk (12) mounted on said rotary shaft (11),
- a first active axial magnetic bearing unit (7) disposed on one side of the armature disk (12) in the axial direction, said first active axial magnetic bearing unit (7) comprising a first control coil (72), and
- means for determining an axial displacement of said armature disk (12) with respect to said first active axial magnetic bearing unit (7),
**characterized in that**
- said means for determining an axial displacement comprise a distance sensor according to one of claims 1 to 6, wherein said sensor coils (21, 22) are disposed in the vicinity of said armature disk (12) such that said sensor coils (21, 22) are capable of electromagnetic interaction with said armature disk (12).

12. Magnetic bearing device according to claim 11, **characterized in that** said sensor coils (21, 22) are essentially of circular shape and disposed in an essentially concentric arrangement around said rotary shaft (11).

13. Magnetic bearing device according to claim 11 or 12, wherein said first active magnetic axial bearing element (7) comprises at least one pole piece (71) which, together with said armature disk (12), defines a magnetic control flux path which guides any magnetic fields generated by said first control coil (72), **characterized in that** said sensor coils (21, 22) are disposed in such a way that said magnetic control flux path does not extend through the region between said sensor coils (21, 22).

14. Magnetic bearing device according to claim 13, **characterized in that** said sensor coils (21, 22) are disposed in a region which is axially confined by said first active axial magnetic bearing element (7) and said armature disk (12).

15. Magnetic bearing device according to claim 12 and claim 13, **characterized in that** said pole piece (71) comprises an outer annular end face (73) facing said armature disk and defining an outer control flux gap with said armature disk (12), that said pole piece (71) further comprises an inner annular end face (74) facing said armature disk (12) and defining an inner control flux gap with said armature disk (12), that said inner annular end face (74) has a smaller diameter than said outer annular end face (73), and that said sensor coils (21, 22) are radially disposed between said outer and inner annular end faces (73, 74).

16. Magnetic bearing device (1), in particular magnetic bearing device according to one of claims 11 to 15, **characterized in that** it comprises a rotation sensor according to claim 7.

17. Method for operating a magnetic bearing device (1) according to one of claims 11 to 15, the method comprising
- driving at least one of said sensor coils in a manner such that, in said common sensor plane, magnetic fields generated by said sensor coils (21, 22, 23) at least partially cancel in a region enclosed by the innermost of said sensor coils (22) and in a region outside of the outermost of said sensor coils (21);
- monitoring the AC impedance of at least one of said sensor coils (21, 22);
- from said AC impedance, deriving a measure for the axial displacement of said armature disk (12);
- from said measure, deriving a value for a control voltage to be applied to said first control coil (72); and
- applying said control voltage to said first control coil (72).
